# EUROPÄISCHE PATENTANMELDUNG

(11) **EP 0 942 515 A2**
(43) Veröffentlichungstag der Anmeldung: **15.09.1999**
(21) Anmeldenummer: 99102581.8
(22) Anmeldetag: 11.02.1999
(51) Int. Cl.: H02K 9/19

(54) **Flüssigkeitsgekühlter Generator**

(30) Priorität: 07.03.1998 DE 19809966
(71) Anmelder: DaimlerChrysler AG, 70567 Stuttgart (DE)
(72) Erfinder: Betsch, Jochen Dr., 71334 Waiblingen (DE); Doll, Gerhard, 73732 Esslingen (DE); Doll, Roland, 73235 Weilheim (DE)

(57) **Zusammenfassung**

Ein flüssigkeitsgekühlter Generator, insbesondere für ein Kraftfahrzeug, ist in einem Gehäuse angeordnet. Zwischen dem Gehäuse und dem Generator befindet sich ein wenigstens teilweise ringförmiger Spaltraum für Kühlflüssigkeit, welcher mit einer Eintrittsöffnung und einer Austrittsöffnung versehen ist. Die Strömungsrichtung der Kühlflüssigkeit zwischen der Eintrittsöffnung und der Austrittsöffnung in dem ringförmigen Teil des Spaltraumes ist überwiegend in Umfangsrichtung des Generators. Die Eintrittsöffnung ist wenigstens annähernd tangential zu der Innenwand des Gehäuses angeordnet. In dem Bereich zwischen der Eintrittsöffnung und der Austrittsöffnung ist entgegen der Strömungsrichtung eine Verengung in dem Spaltraum vorgesehen.

## Beschreibung

Die Erfindung betrifft einen flüssigkeitsgekühlten Generator, insbesondere für ein Kraftfahrzeug, welcher in einem Gehäuse angeordnet ist, nach der im Oberbegriff von Anspruch 1 näher definierten Art.

Ein gattungsgemäßer Generator ist aus DE 44 44 956 A1 bekannt.

Einen weiteren flüssigkeitsgekühlten Generator beschreibt die DE 41 04 740 A1.

Nachteilig bei diesen bekannten Generatoren ist jedoch der durch einen schlechten Strömungsverlauf der Kühlflüssigkeit zwischen dem Generator und dem Gehäuse entstehende relativ hohe Wasserverbrauch bei gleichzeitiger geringer Kühlungseffizienz.

Die durch die Eintrittsöffnung einströmende Kühlflüssigkeit trifft nämlich in beiden Fällen direkt auf eine Wand bzw. auf den Generator, was zu einer sogenannten Prallströmung führt. Dadurch entstehen relativ große Druckverluste in dem Spaltraum, wodurch die Kühlung des Generators sehr unausgeglichen ist. Des weiteren sind bei den bekannten Lösungen die komplizierten Gehäuseformen und die für die Herstellung dieser Formen notwendigen Gießwerkzeuge nachteilig.

Es ist daher Aufgabe der Erfindung, einen flüssigkeitsgekühlten Generator zu schaffen, bei welchem ein sehr guter Strömungsverlauf in dem Spaltraum zwischen Generator und Gehäuse gegeben ist. Dabei soll gleichzeitig möglichst wenig Wasser bei einer möglichst hohen Kühlungseffizienz eingesetzt werden.

Erfindungsgemäß wird diese Aufgabe durch die im kennzeichnenden Teil von Anspruch 1 genannten Merkmale gelöst.

Durch die Anordnung der Eintrittsöffnung tangential zu der Innenwand des Gehäuses wird der in den Spaltraum eintretenden Kühlflüssigkeit eine Vorzugsströmungsrichtung in Umfangsrichtung des Generators gegeben. Gleichzeitig werden Prallströmungen mit einem damit verbundenen hohen Druckverlust vermieden, was letztendlich zu einem vorteilhaften Strömungsverlauf und somit zu einer guten Kühlung führt.

Durch die Verengung in dem Spaltraum zwischen der Eintrittsöffnung und der Austrittsöffnung wird eine Kurzschlußströmung entgegen der normalen Strömungsrichtung zwischen den beiden Öffnungen weitgehend vermieden, wobei durch die erfindungsgemäße Lösung der bauliche Aufwand gering gehalten wird und durch den Generator angeregte Gehäuseschwingungen verringert werden.

Vorteilhafte Ausgestaltungen und Weiterbildungen der Erfindung ergeben sich aus den Unteransprüchen und aus dem nachfolgend anhand der Zeichnung prinzipmäßig dargestellten Ausführungsbeispiel.

Es zeigt:
- Fig. 1: einen Schnitt durch den erfindungsgemäßen Generator; und
- Fig. 2: einen Schnitt nach der Linie I-I aus Fig. 1.

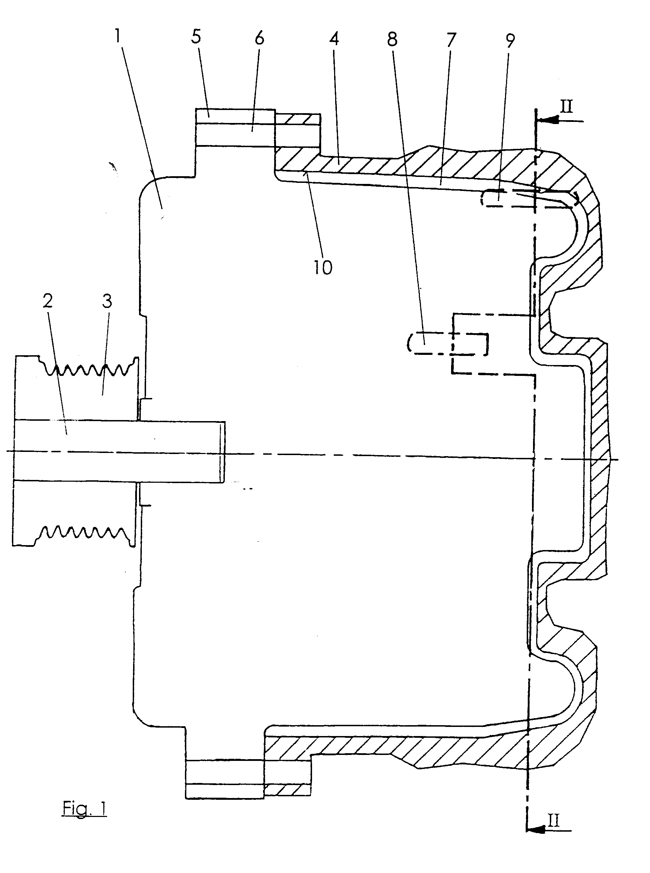

Fig. 1 zeigt einen Generator 1, der vollständig gekapselt ist. Aus diesem Grund sind die einzelnen Bauteile des Generators 1, wie z.B. Rotor oder Stator, nicht dargestellt. Diese sind jedoch von an sich bekannter Bauart. An einem Ende ist der Generator 1 mit einer Ausgangswelle 2 versehen, auf welcher sich eine Riemenscheibe 3 befindet. Der Generator 1 ist für den Einsatz in einem nicht dargestellten Kraftfahrzeug vorgesehen und wird auch als Lichtmaschine bezeichnet.

Der Generator 1 befindet sich in einem Gehäuse 4, welches topfartig ausgebildet und an die Kontur des Generators 1 angepaßt ist. An der Seite der Ausgangswelle 2 ist der Generator 1 an seinem Umfang einstückig mit einem Verbindungsflansch 5 ausgebildet, an welchem über Bohrungen 6 und nicht dargestellte Schrauben das Gehäuse 4 angebracht ist.

Zwischen dem Gehäuse 4 und dem Generator 1 befindet sich ein Spaltraum 7, der in dem in Fig. 1 dargestellten Schnitt mit annähernd gleichmäßiger Breite von ca. 2 bis 3 mm ausgebildet ist. Dadurch ergibt sich außer an dem Verbindungsflansch 5 kein Kontakt zwischen dem Generator 1 und dem Gehäuse 4, wodurch von dem Generator 1 an das Gehäuse 4 Schwingungen nur in sehr geringem Ausmaß übertragen werden können. Der Spaltraum 7 dient zur Aufnahme von Kühlflüssigkeit, die durch eine Eintrittsöffnung 8 zugeführt und eine Austrittsöffnung 9 abgeführt wird. Der Spaltraum 7 befindet sich dabei sowohl in Umfangsrichtung des Generators 1, als auch an dessen von der Ausgangswelle 2 abgewandten Seite bzw. Planfläche. Durch die den Spaltraum 7 durchströmende Kühlflüssigkeit wird der Generator 1 gekühlt, wobei die Kühlflüssigkeit z.B. dem Kühlkreislauf einer Brennkraftmaschine des Kraftfahrzeugs entnommen sein kann.

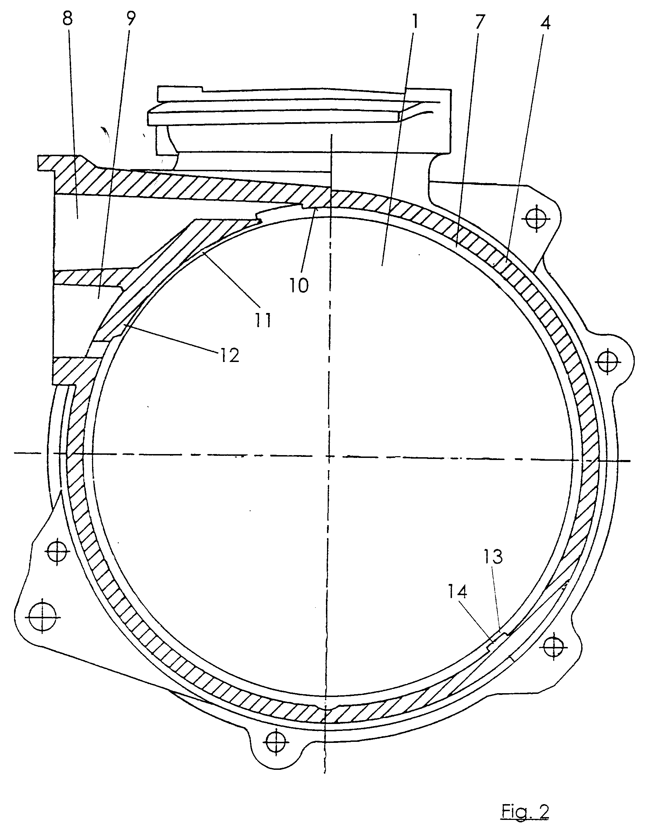

Wie aus Fig. 2 hervorgeht, ist die Eintrittsöffnung 8 an der höchsten Stelle des Spaltraumes 7 angebracht und so ausgerichtet, daß durch dieselbe einströmende Kühlflüssigkeit tangential in den Spaltraum 7 eintritt. Durch die Anbringung der Eintrittsöffnung 8 an der höchsten Stelle ist eine gute Entlüftung des Gehäuses 4 gegeben.

Die Kühlflüssigkeit trifft somit in einem relativ flachen Winkel auf eine Innenwand 10 des Gehäuses 4, wodurch eine sehr geringe Prallströmung entsteht und Druckverluste vermieden werden. In Strömungsrichtung ist die Austrittsöffnung 9 um einen Winkel von mehr als 270°, vorzugsweise um ca. 300° gegenüber der Eintrittsöffnung 8 versetzt. Somit wird der Generator 1 von der Kühlflüssigkeit in dem Spaltraum 7 über einen sehr großen Winkelbereich umströmt, was zu einer sehr guten Kühlung des Generators 1 führt.

Um eine Kurzschlußströmung, d.h. eine direkte Strömung von der Eintrittsöffnung 8 zu der Austrittsöffnung 9 zu verhindern bzw. diese möglichst gering zu halten, ist in dem Spaltraum 7 zwischen der Eintrittsöffnung 8 und der Austrittsöffnung 9 eine Verengung 11 von ca. 1 mm vorgesehen, welche durch einen Vorsprung 12 an dem Gehäuse 4 gebildet ist. Der Vorsprung 12 kann gegebenenfalls an die Innenwand 10 des Gehäuses 4 angeschweißt oder angeschraubt werden, ist hier jedoch einstückig mit dem Gehäuse 4 verbunden.

Zwar kann durch die Verengung 11 noch immer Kühlflüssigkeit strömen, dies jedoch in weit geringerem Ausmaß als ohne die Verengung 11, und es ergibt sich eine weitgehend störungsfreie radiale Strömung in dem Spaltraum 7.

Gegenüber bzw. um ca. 180° verdreht zu der Eintrittsöffnung 8 und der Austrittsöffnung 9 ist in dem Spaltraum 7 eine weitere Verengung 13 vorgesehen, die wiederum durch einen Vorsprung 14 an dem Gehäuse 4 gebildet ist. Alternativ wäre es bei beiden Verengungen 11 und 13 auch möglich, die Vorsprünge 10 und 12 an dem Generator 1 anzubringen.

Durch das so entstehende Druckgefälle fließt die Kühlflüssigkeit in dem Spaltraum 7 auch in Richtung der von der Ausgangswelle 2 abgewandten Planfläche des Generators 1. In dem Bereich der Planfläche ist der Spaltraum 7 aus fertigungstechnischen Gründen nicht mit einer konstanten Breite ausgebildet.

In Fig. 1 ist diese Strömung der Kühlflüssigkeit in diesem der Ausgangswelle 2 abgewandten Bereich des Spaltraums 7 erkennbar. Da sich in diesem Bereich ein nicht dargestelltes Lager des Generators befindet, ist eine sehr gute Kühlung dieses Bereiches notwendig.

Die Kühlflüssigkeit fließt somit von der Eingangsöffnung 8 in Richtung der Verengung 13 und, da dort ein Druckgefälle auftritt, in axialer Richtung teilweise zu der Planfläche. Ein anderer Teil der Kühlflüssigkeit fließt dann von der Verengung 13 weiter zu der Austrittsöffnung 9.

Wie ebenfalls aus Fig. 1 hervorgeht, ist die Austrittsöffnung 9 gegenüber der Eintrittsöffnung 8 in axialer Richtung versetzt, was zu einer weiteren Verteilung der Kühlflüssigkeit in dem Spaltraum 7 führt.

In der Eintrittsöffnung 8 des Gehäuses 4 kann in nicht dargestellter Weise eine Kalibrierdüse eingesetzt sein, welche die gesamte Durchsatzmenge von Kühlflüssigkeit in dem Spaltraum 7 steuert.

Das Gehäuse 4 ist hierbei als Druckgußteil ausgebildet, welches ohne Kerne und somit durch einfache, einzügige Werkzeuge geformt werden kann.

## Patentansprüche

1. Flüssigkeitsgekühlter Generator, insbesondere für ein Kraftfahrzeug, welcher in einem Gehäuse angeordnet ist, wobei sich zwischen dem Gehäuse und dem Generator ein wenigstens teilweise ringförmiger Spaltraum für Kühlflüssigkeit befindet, welcher mit einer Eintrittsöffnung und einer Austrittsöffnung versehen ist, und wobei die Strömungsrichtung der Kühlflüssigkeit zwischen der Eintrittsöffnung und der Austrittsöffnung in dem ringförmigen Teil des Spaltraumes überwiegend in Umfangsrichtung des Generators ist,
**dadurch gekennzeichnet,** daß
die Eintrittsöffnung (8) wenigstens annähernd tangential zu der Innenwand (10) des Gehäuses (4) angeordnet ist, und daß in dem Bereich zwischen der Eintrittsöffnung (8) und der Austrittsöffnung (9) entgegen der Strömungsrichtung eine Verengung (11) in dem Spaltraum (7) vorgesehen ist.

2. Flüssigkeitsgekühlter Generator nach Anspruch 1,
**dadurch gekennzeichnet,** daß
die Austrittsöffnung (9) in Strömungsrichtung um einen Winkel von mehr als 270° gegenüber der Eintrittsöffnung (8) versetzt angeordnet ist.

3. Flüssigkeitsgekühlter Generator nach Anspruch 1 oder 2,
**dadurch gekennzeichnet,** daß
die Eintrittsöffnung (8) in axialer Richtung versetzt zu der Austrittsöffnung (9) angeordnet ist.

4. Flüssigkeitsgekühlter Generator nach Anspruch 1, 2 oder 3,
**dadurch gekennzeichnet,** daß
in einem der Eintrittsöffnung (8) und der Austrittsöffnung (9) wenigstens annähernd gegenüberliegenden Bereich des Spaltraumes (7) eine Verengung (13) in dem Spaltraum (7) vorgesehen ist.

5. Flüssigkeitsgekühlter Generator nach einem der Ansprüche 1 bis 4,
**dadurch gekennzeichnet,** daß
die Verengung (11) zwischen der Eintrittsöffnung (8) und der Austrittsöffnung (9) durch einen wenigstens annähernd über die gesamte Innenwand (10) des Gehäuses (4) und in Längsrichtung desselben verfaufenden Vorsprung (12) an dem Gehäuse (4) gebildet ist.

6. Flüssigkeitsgekühlter Generator nach Anspruch 4,
**dadurch gekennzeichnet,** daß
die Verengung (13) in dem der Eintrittsöffnung (8) und der Austrittsöffnung (9) wenigstens annähernd gegenüberliegenden Bereich durch einen wenigstens annähernd über die gesamte Innenwand (10) des Gehäuses (4) und in Längsrichtung desselben verlaufenden Vorsprung (14) an dem Gehäuse (4) gebildet ist.
